# EUROPEAN PATENT SPECIFICATION

(11) **EP 4 086 441 B1**
(45) Date of publication and mention of the grant of the patent: **06.05.2026**
(21) Application number: 20911227.5
(22) Date of filing: 25.12.2020
(51) Int. Cl.: F02B 29/04, F28F 9/00

(54) **OUTER HOUSING, CORE BODY, AND INTERCOOLER**
AUSSENGEHÄUSE, KERNKÖRPER UND ZWISCHENKÜHLER
BOÎTIER EXTERNE, CORPS CENTRAL ET REFROIDISSEUR INTERMÉDIAIRE

(30) Priority: 31.12.2019 CN 201911420834
(43) Date of publication of application: 09.11.2022
(73) Proprietor: Zhejiang Yinlun Machinery Co., Ltd., Tiantai County, Zhejiang 317200 (CN)
(72) Inventor: LI, Tian, Zhejiang 317200 (CN); TANG, Pingqiang, Zhejiang 317200 (CN); XIE, Jian, Zhejiang 317200 (CN); XIE, Xianlong, Zhejiang 317200 (CN); YANG, Lianmin, Zhejiang 317200 (CN); YAO, Bin, Zhejiang 317200 (CN); MIN, Fuhai, Zhejiang 317200 (CN); CHEN, Yutao, Zhejiang 317200 (CN)
(74) Representative: Kolster Oy Ab
(86) International application number: PCT/CN2020/139708
(87) International publication number: WO 2021/136113

(56) References cited:
- WO-A2-2011/064090
- WO-A2-2011/064090
- CN-A- 104 976 818
- CN-A- 104 976 818
- CN-A- 104 976 818
- CN-A- 107 407 537
- CN-A- 108 533 383
- CN-A- 110 114 629
- CN-A- 111 042 909
- CN-A- 111 141 164
- CN-U- 206 386 171
- CN-U- 206 830 294
- CN-U- 211 230 612
- CN-U- 211 527 179
- KR-A- 20160 100 599
- KR-A- 20160 100 599

## Description

### Technical Field

The present disclosure relates to the field of heat exchange apparatus technologies, and particularly to an outer housing, a core body, and an intercooler.

### Background Art

Generally, an intercooler includes a core body, a chamber body, and a main plate, the main plate is sleeved over the core body, and the chamber body is mounted on the core body by the main plate, such that the chamber body is communicated with the core body to form a sealed environment, and gas may flow into the core body from one side of the chamber body for heat exchange and flow out from the other side of the chamber body. Generally, the core body includes a plurality of chips stacked together, and in order to prevent the plural chips from loose movement after the chips are connected, the outer housing is sleeved over the whole formed after the chips are connected; the outer housing is generally formed by abutting two U-shaped housings with the same size, and abutting positions of the two U-shaped housings are welded to form a welding seam extending in the gas flow direction, such that gas is limited inside the chamber body and the housings.

The inventors found in researches that the existing intercooler has the following disadvantages:
after the two U-shaped housings are welded, gas leakage is easy to occur at the welding seam.

Prior art documents WO 2011/064090, KR 2016 0100599 and CN 104976818 disclose a housing where a gas blocking portion extends through a seam therein.

### Summary

An object of the present disclosure is to, for example, provide an outer housing, a core body, and an intercooler, which may improve the problem that gas leakage is easy to occur at a welding seam of two housings of an existing intercooler.

An embodiment of the present disclosure is implemented as follows.

One aspect of the present disclosure provides an outer housing, a seam extending in the first direction is formed on the outer housing, and at least one gas blocking portion penetrating through the seam is formed at the seam.

The outer housing includes a first housing and a second housing abutting each other to form the seam, and the first housing, the seam, and the second housing are arranged in sequence in the second direction;

the gas blocking portion extends in the second direction, or the extension direction of the gas blocking portion is inclined relative to the second direction; the first direction and the second direction have an included angle.

The technical solution has the following beneficial effects: on the outer housing, the seam formed by abutting the first housing and the second housing is a long seam on the outer housing, and has a relatively large leakage risk, and the gas blocking portion is provided at the seam formed by abutting the first housing and the second housing, so as to better play its gas blocking effect, thus achieving a more obvious gas leakage alleviation effect.

Optionally, the number of the gas blocking portions is at least two, and the at least two gas blocking portions are arranged in the first direction.

The technical solution has the following beneficial effects: when gas leaks from the seam, no matter in the first direction or the direction perpendicular to the first direction, the gas blocking portions may effectively block leaked airflow, and the at least two gas blocking portions have a better airflow blocking effect.

Each gas blocking portion has a sheet-shaped, plate-shaped or block-shaped convex structure.

The gas blocking portion and the first housing are integrally formed.

The technical solution has the following beneficial effects: integral formation of the gas blocking portion and the first housing may avoid a connecting trace at the position where the gas blocking portion is connected with the first housing, and thus avoids the possibility that the gas leaks from the connecting trace; due to the integral formation, the portion of the gas blocking portion formed at the first housing has higher strength, thus reducing the risk that the portion of the gas blocking portion is broken possibly at the formation position; and moreover, the integral formation avoids the step of assembling the gas blocking portion, thus simplifying the production process, and improving the production efficiency.

Optionally, a groove portion cooperating with the gas blocking portion to accommodate the gas blocking portion is formed on the second housing.

The technical solution has the following beneficial effects: when the first housing abuts the second housing, the gas blocking portion is located in the groove portion, such that the gas blocking portion may be prevented from hindering the abutment between the first housing and the second housing, and then, two edges of the seam formed between the first housing and the second housing may be attached tightly, thus reducing a gas leakage risk.

Optionally, the two side edges of the gas blocking portion in the first direction are attached to the inner wall of the groove portion. The technical solution has the following beneficial effects: after the first housing and the second housing are spliced together, the airflow (particularly the airflow flowing in the length direction of the seam) is difficult to leak between the gas blocking portion and the groove portion, thus reducing the risk of gas leakage in the intercooler.

Optionally, the two side edges of the gas blocking portion linearly extend in the second direction.

Optionally, the two side edges are inclined relative to each other.

The technical solution has the following beneficial effects: when a slit which may cause gas leakage occurs at the seam between the first housing and the second housing, the first housing and the second housing move relatively in the second direction; since the two side edges of the gas blocking portion in the first direction are attached to the inner wall of the groove portion and the two side edges of the gas blocking portion linearly extend in the second direction, the two side edges of the gas blocking portion in the first direction are always attached to the inner wall of the groove portion when the first housing and the second housing move relatively in the second direction, such that the airflow (particularly the airflow flowing in the length direction of the seam) is difficult to leak between the gas blocking portion and the groove portion, thus improving the effect of blocking the leaked gas.

The end surface of one end of the gas blocking portion apart from the first housing in the second direction is an arc-shaped guide surface, and the arc-shaped guide surface is connected with the two side edges.

The technical solution has the following beneficial effects: when inserted into the groove portion, the gas blocking portion may be guided by the arc-shaped guide surface, thereby improving the assembly efficiency; and for achieving the guide effect of the arc-shaped guide surface, the arc-shaped guide surface protrudes in the direction apart from the first housing in the second direction.

The width of the arc-shaped guide surface in the first direction decreases gradually in the direction apart from the first housing.

Optionally, the end surface of one end of the gas blocking portion apart from the first housing in the second direction is a guide inclined surface, and the guide inclined surface is connected with the two side edges.

Another aspect of the present disclosure provides a core body, including the above-mentioned outer housing.

Optionally, the core body includes a sealing piece located on the inner side of the outer housing, the sealing piece covers the seam and the gas blocking portion, and the sealing piece is hermetically connected with the outer housing at the seam.

The technical solution has the following beneficial effects: when a slit causing gas leakage occurs at the seam, gas is difficult to leak from the core body in the direction perpendicular to the first direction, and gas flowing in the length direction of the seam is blocked by the gas blocking portion, such that the flow rate of the leaked gas is reduced under the combined action of the sealing piece and the gas blocking portion; moreover, the first housing, the second housing and the gas blocking portion are connected into a whole through the flange of a chip (core sheet), thus reducing the possibility that due to the relative movement of the first housing and the second housing, the slit causing gas leakage occurs at the seam, and reducing the gas leakage possibility of an intercooler.

Optionally, the sealing piece is configured as a chip located in the outer housing, the chip has a flange, and the flange is hermetically connected with the outer housing at the seam.

The technical solution has the following beneficial effects: the chip is an essential component in the core body, and the cost of providing another component as the sealing piece may be avoided by using the chip as the sealing piece.

Optionally, the core body includes a chip and a side plate located in the outer housing, the side plate is connected with the outer housing and the chip, and the side plate serves as the sealing piece.

The technical solution has the following beneficial effects: by using the above-mentioned side plate as the sealing piece, there is no need to use the flange to cover the seam and the gas blocking portion, such that the size of the flange in the second direction may be reduced appropriately, and then, the size of the core body in the second direction is reduced, thus facilitating miniaturization of the intercooler.

Optionally, the sealing piece is fixedly welded to the outer housing.

A third aspect of the present disclosure provides an intercooler, including the above-mentioned core body.

Optionally, the intercooler includes a main plate mounted to the outer housing, and the main plate covers the gas blocking portion and is hermetically connected with the gas blocking portion.

The technical solution has the following beneficial effects: when the main plate covers the gas blocking portion from the outer side of the outer housing, the first housing, the second housing and the gas blocking portion may be tightly connected into a whole, such that the first housing and the second housing are difficult to move relative to each other, and then, a slit causing gas leakage is difficult to occur at the seam, thus reducing the gas leakage possibility of the intercooler.

Optionally, the main plate is provided on the outer side of the outer housing, and seals one side of the seam located on the outer side of the outer housing.

Compared with the prior art, the technical solutions of the present disclosure have the following beneficial effects, for example.

In the outer housing, the core body, and the intercooler according to the present disclosure, when gas leakage appears at the seam of the outer housing, since the gas blocking portion penetrates through the seam, the gas may be blocked by the gas blocking portion when flowing to the gas blocking portion, so as to limit the flow rate of leaked gas to a certain extent, thereby alleviating the degree of gas leakage.

Additional technical features of the present disclosure and advantages thereof will be more clearly set forth in the description which follows, or may be learned by the concrete practice of the present disclosure.

### Brief Description of Drawings

To describe the technical solutions in the embodiments of the present disclosure more clearly, the following briefly describes the drawings required for describing the embodiments. Apparently, the drawings in the following description show merely some embodiments of the present disclosure, and a person of ordinary skill in the art may still derive other drawings from these drawings without creative efforts.
FIG. 1 is a schematic perspective structural view of an implementation of a core body according to an embodiment of the present disclosure;
FIG. 2 is a schematic perspective structural view of an implementation of an outer housing according to an embodiment of the present disclosure;
FIG. 3 is a schematic structural side view of an implementation of the outer housing according to the embodiment of the present disclosure;
FIG. 4 is a schematic partial enlarged view of part A in FIG. 3;
FIG. 5 is a schematic view of an implementation of cooperation between an gas blocking portion and a groove portion in an embodiment of the present disclosure;
FIG. 6 is a schematic view of another implementation of cooperation between the gas blocking portion and the groove portion in the embodiment of the present disclosure;
FIG. 7 is a schematic structural front view of an implementation of the core body according to the embodiment of the present disclosure;
FIG. 8 is a schematic partial enlarged view of part B in FIG. 7;
FIG. 9 is a schematic structural front view of another implementation of the core body according to the embodiment of the present disclosure; and
FIG. 10 is a schematic partial enlarged view of part C in FIG. 9.

### Reference numerals:

100-outer housing; 110-first housing; 120-second housing; 130-gas blocking portion; 131-edge; 132-arc-shaped guide surface; 140-seam; 200-main plate; 300-chip; 310-flange; 400-side plate; 500-slit; 600-groove portion.

### Detailed Description

To make the objectives, technical solutions and advantages of the embodiments of the present disclosure clearer, the technical solutions of the present disclosure are clearly and completely described with reference to the drawings, and apparently, the described embodiments are not all but a part of the embodiments of the present disclosure. All other embodiments obtained by a person of ordinary skill in the art based on the embodiments of the present disclosure without creative efforts shall fall within the protection scope of the present disclosure.

Accordingly, the following detailed description of the embodiments of the present disclosure provided in the drawings is not intended to limit the scope of protection of the present disclosure, but only represents selected embodiments of the present disclosure. All other embodiments obtained by a person of ordinary skill in the art based on the embodiments of the present disclosure without creative efforts shall fall within the protection scope of the present disclosure.

In descriptions of the present disclosure, it should be noted that, directions or positional relationships indicated by terms "inner", "outer" etc. are based on orientations or positional relationships shown in the drawings, and they are used only for describing the present disclosure and for description simplicity, but do not indicate or imply that an indicated device or element must have a specific orientation or be constructed and operated in a specific orientation. Therefore, it cannot be understood as a limitation on the present disclosure. In addition, the terms such as "first" and "second" are only used for purposes of description and are not intended to indicate or imply importance in relativity.

In the description of the present disclosure, it should be noted that unless specified or limited otherwise, the terms "mounted", "connected", and "coupled" and the like are used broadly, and it may be, for example, fixed connection, detachable connection, or integral connection; may also be mechanical connection or electrical connection; may also be direct connection or indirect connection via intermediate medium; may also be inner communication between two elements. The specific meaning of above terms in the present disclosure can be understood by those skilled in the art according to specific situations.

It should be noted that features in embodiments of the present disclosure may be combined with each other without conflicts.

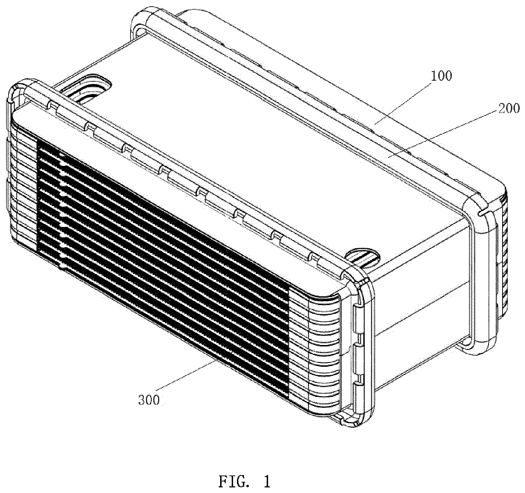

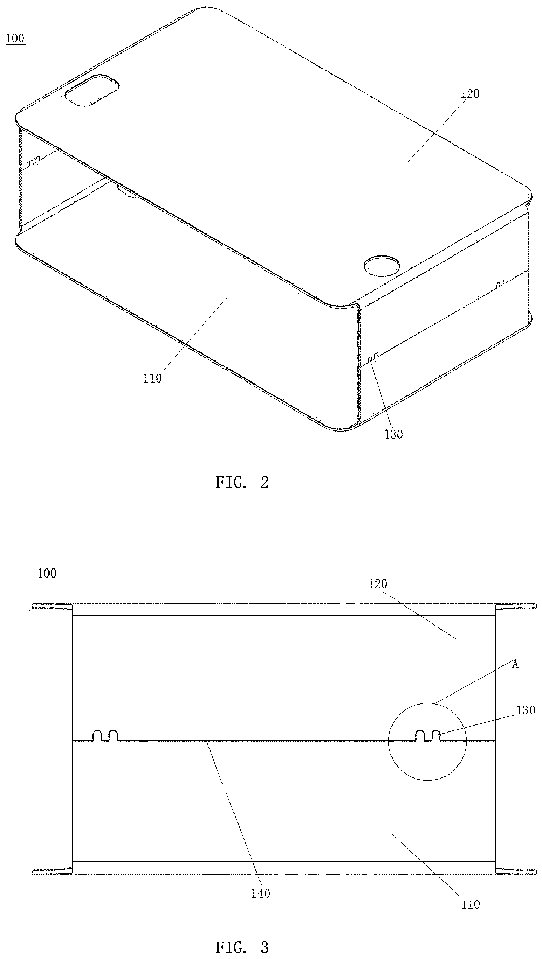

As shown in FIGS. 1 to 10, one aspect of the present disclosure provides an outer housing 100, a seam 140 extending in the first direction is formed on the outer housing 100, and gas blocking portions 130 penetrating through the seam 140 are formed at the seam 140. In other words, the gas blocking portions 130 extend in the thickness direction of the seam 140, and the gas blocking portions 130 block a part of the seam 140 in the extension direction of the seam 140, such that gas flowing in the seam 140 in the extension direction of the seam 140 is blocked by the gas blocking portions 130, thereby alleviating the leakage degree of gas. In the above, the thickness direction of the seam 140 is the direction of the distance between the two independent walls forming the seam 140. That is, when the two independent walls are attached to each other, the distance between the two independent walls is zero, and at this time, the thickness of the seam 140 is zero; and when the two independent walls move away from each other, the distance increases, and the thickness of the seam 140 increases.

It should be noted that the seam 140 in the embodiment of the present disclosure may be a welding seam formed on the outer housing 100, or a bonding line formed by tightly attaching two separate edges 131 of the outer housing 100, or the seam 140 is a crack formed in the manufacturing process of the outer housing 100.

In the outer housing 100 according to the embodiment of the present disclosure, when gas leakage appears at the seam 140, since the gas blocking portion 130 penetrates through the seam 140, and the gas blocking portion 130 protrudes at the seam 140, the gas may be blocked by the gas blocking portion 130 when flowing to the gas blocking portion 130, so as to limit the flow rate of leaked gas to a certain extent, thereby alleviating the leakage degree of gas.

Optionally, the outer housing 100 includes a first housing 110 and a second housing 120 abutting each other to form the seam 140, and the first housing 110, the seam 140, and the second housing 120 are arranged in sequence in the second direction, wherein the second direction and the first direction have an included angle, for example, the first direction is perpendicular to the second direction. Meanwhile, the thickness direction of the seam 140 may be parallel to the second direction.

Optionally, the gas blocking portion 130 extends in the second direction, or the extension direction of the gas blocking portion 130 is inclined relative to the second direction.

On the housing 100, the seam 140 formed by abutting of the first housing 110 and the second housing 120 is a long seam on the outer housing 100, and has a relatively large leakage risk, and the gas blocking portion 130 is provided at the seam 140 formed by abutting of the first housing 110 and the second housing 120, so as to better play its gas blocking effect, thus achieving a more obvious gas leakage alleviation effect; and certainly, the gas blocking portion 130 may be provided at other possible seam structures on the outer housing 100.

It should be understood that the first housing 110 and the second housing 120 are both U-shaped housings, and the first housing 110 and the second housing 120 abut each other to form two seams 140 extending in the same direction.

Optionally, at least two gas blocking portions 130 are provided at each seam 140, and the at least two gas blocking portions 130 are arranged in the first direction. When gas leaks from the seam 140, no matter in the first direction or the direction perpendicular to the first direction, the gas blocking portion 130 may effectively block leaked airflow, and the number of the gas blocking portions 130 is at least two, thus achieving a better airflow blocking effect.

It should be understood that the number of the gas blocking portions 130 may be 2 to 5, for example, the number of the gas blocking portions 130 is 2, 3, or 5.

Optionally, the gas blocking portion 130 is integrally formed on the first housing 110. Integral formation of the gas blocking portion 130 and the first housing 110 may avoid a connecting trace at the position where the gas blocking portion 130 is connected with the first housing 110, and thus avoids the possibility that the gas leaks from the connecting trace.

Meanwhile, due to the integral formation of the gas blocking portion 130 on the first housing 110, the strength is high at the connection position of the gas blocking portion 130 and the first housing 110, thus reducing the risk that the gas blocking portion 130 is broken possibly at the formation position; moreover, the integral formation avoids the step of assembling the gas blocking portion 130 and the first housing 110, thus simplifying the production process, reducing the labor strength, and improving the production efficiency. The gas blocking portion 130 may be a convex structure formed on the first housing 110, and the convex structure may be a sheet-shaped structure, a plate-shaped structure, a block-shaped structure, or the like. Certainly, the gas blocking portion 130, the first housing 110 and the second housing 120 may be formed separately and then connected; for example, the separately produced gas blocking portion 130 may be welded at corresponding positions of the first housing 110 and the second housing 120 where the seam 140 is formed, or the gas blocking portion 130 may be fixed by means of threaded connection at the corresponding positions of the first housing 110 and the second housing 120 where the seam 140 is formed.

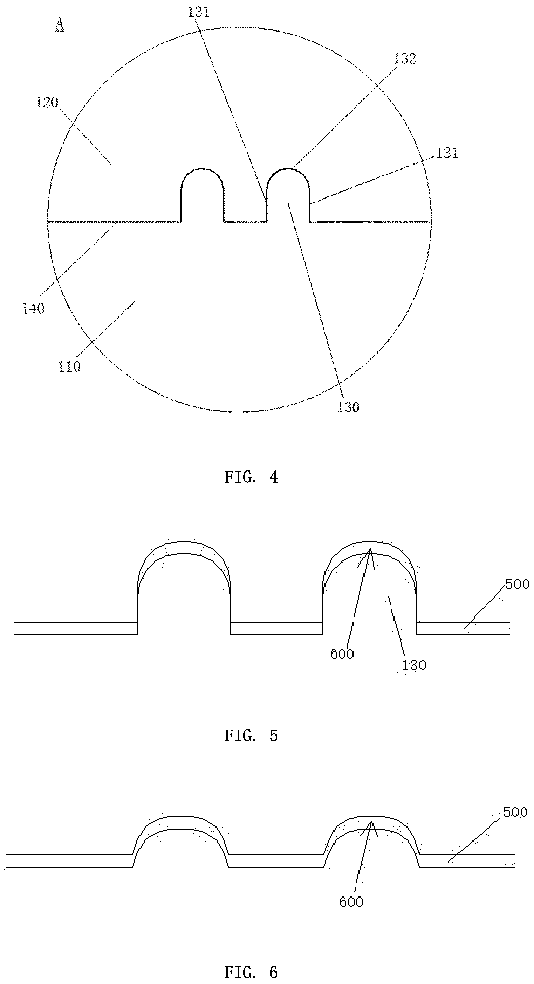

As shown in FIG. 6, optionally, a groove portion 600 cooperating with the gas blocking portion 130 to accommodate the gas blocking portion 130 is formed on the second housing 120. When the first housing 110 abuts the second housing 120, the gas blocking portion 130 is clamped/engaged in the groove portion 600, such that the gas blocking portion 130 may be prevented from hindering the abutment between the first housing 110 and the second housing 130, and then, the two edges 131 of the seam 140 formed between the first housing 110 and the second housing 120 may be attached tightly to each other, thus reducing a gas leakage risk.

Optionally, the two side edges 131 of the gas blocking portion 130 in the first direction are both attached to the inner wall of the groove portion 600. Therefore, after the first housing 110 and the second housing 120 are spliced, the airflow (particularly the airflow flowing in the length direction of the seam 140) is difficult to leak from the connection position of the gas blocking portion 130 and the groove portion 600, thus reducing the risk of gas leakage in an intercooler; certainly, the two side edges 131 of the gas blocking portion 130 in the first direction may not be attached to the inner wall of the groove portion 600, such that a gap is left between the gas blocking portion 130 and the inner wall of the groove portion 600 and the gap is sealed by solder or other sealing structures.

Furthermore, the effect of blocking the airflow may also be achieved when one side edge 131 of the two side edges 131 of the gas blocking portion 130 in the first direction is attached to the inner wall of the groove portion 600.

It should be understood that, when the gas blocking portion 130 has a plate shape or a block shape, the gas blocking portion 130 has a certain thickness, and the thickness direction of the gas blocking portion 130 is a direction perpendicular to a plane defined by the first direction and the second direction; at this point, both side surfaces of the gas blocking portion 130 in the first direction are planes, and the gas blocking portion 130 is attached to the inner wall of the groove portion 600; that is, both side surfaces of the gas blocking portion 130 are attached to the inner wall of the groove portion 600, so as to form a surface sealing structure, thus achieving a good sealing effect.

As shown in FIG. 5, optionally, the two side edges 131 of the gas blocking portion 130 linearly extend in the second direction. When a slit 500 which may cause gas leakage occurs at the seam 140 between the first housing 110 and the second housing 120, for example, the first housing 110 and the second housing 120 move relatively in the second direction, such that the first housing 110 and the second housing 120 move away from each other in the second direction, and at this point, the slit 500 increases; since the two side edges 131 of the gas blocking portion 130 in the first direction are attached to the inner wall of the groove portion 600 and the two side edges 131 of the gas blocking portion 130 linearly extend in the second direction, the two side edges 131 of the gas blocking portion 130 in the first direction may be always attached to the inner wall of the groove portion 600 even when the first housing 110 and the second housing 120 move away from each other in the second direction, such that the airflow (particularly the airflow flowing in the length direction of the seam 140) is difficult to pass over the gas blocking portion 130 and leak between the gas blocking portion 130 and the inner wall of the groove portion 600, thus improving the effect of blocking the leaked gas.

It should be understood that, as shown in FIG. 6, the two side edges 131 of the gas blocking portion 130 in the first direction may be inclined relative to each other.

The end surface of one end of the gas blocking portion 130 apart from the first housing 110 in the second direction is an arc-shaped guide surface 132, and the arc-shaped guide surface 132 is located between the two side edges 131 and meanwhile smoothly connected with the two side edges 131; specifically, the width of the arc-shaped guide surface 132 in the first direction decreases gradually in the direction apart from the first housing 110; during assembly of the first housing 110 and the second housing 120, the end of the arc-shaped guide surface 132 apart from the first housing 110 is inserted into the groove portion 600 on the second housing 120 first, and since the end of the arc-shaped guide surface 132 apart from the first housing 110 has a smallest width, insertion of the gas blocking portion 130 into the groove portion 600 is facilitated. When gradually inserted into the above-mentioned groove portion 600, the gas blocking portion 130 may be guided by the arc-shaped guide surface 132, thereby improving the assembly efficiency; for the guide effect of the arc-shaped guide surface 132, the arc-shaped guide surface 132 protrudes in the direction apart from the first housing 110 in the second direction; that is, the arc-shaped guide surface 132 is a convex surface (i.e. a surface protruding outwards); certainly, the arc-shaped guide surface may also be an inclined surface provided obliquely relative to the second direction.

Another aspect of the present disclosure provides a core body, including the outer housing 100 according to the embodiment of the present disclosure.

The outer housing 100 according to the above-mentioned embodiment of the present disclosure is adopted in the core body according to the embodiment of the present disclosure, and when gas leakage appears at the seam 140, since the gas blocking portion 130 penetrates through the seam 140, the gas may be blocked by the gas blocking portion 130 when flowing to the gas blocking portion 130, so as to limit the flow rate of leaked gas to a certain extent, thereby alleviating the leakage degree of gas.

Optionally, the core body according to the embodiment of the present disclosure includes a sealing piece located on the inner side of the outer housing 100, the sealing piece covers the seam 140 and the gas blocking portions 130, and the sealing piece is hermetically connected with the outer housing 100 at the seam 140; that is, the sealing piece seals the side of the seam 140 located on the inner side of the outer housing 100. Therefore, when a slit 500 causing gas leakage appears at the seam 140, gas is difficult to leak outwards from the core body in the direction perpendicular to the first direction, gas flowing in the extension direction of the seam 140 may be blocked by the gas blocking portion 130, and the flow rate of the leaked gas is further reduced under the combined action of the sealing piece and the gas blocking portion 130; moreover, the first housing 110, the second housing 120 and the gas blocking portions 130 are connected by the flange 310 of a chip 300 to form a whole, such that the first housing 110 and the second housing 120 have more stable relative positions and the first housing 110 and the second housing 120 are difficult to move relatively, and thus, the possibility that the slit 500 causing gas leakage appears at the seam 140 is reduced, the gas leakage possibility of an intercooler is reduced, and the intercooler runs more safely and reliably.

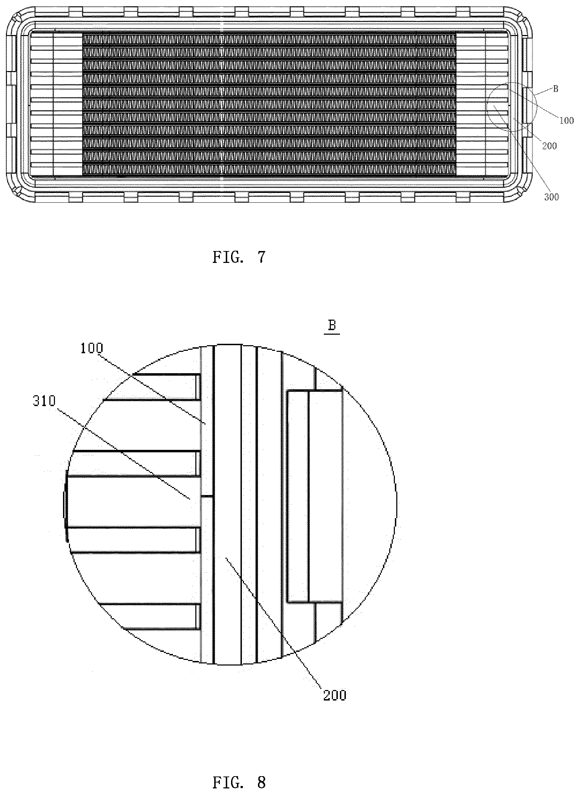

As shown in FIGS. 7 and 8, optionally, the core body according to the embodiment of the present disclosure includes a chip 300 located inside the outer housing 100, the sealing piece is the chip 300, the chip 300 has a flange 310, and the flange 310 is hermetically connected with the outer housing 100 at the seam 140. The chip 300 is an essential component in the core body, and the cost increased by providing another component as the sealing piece may be avoided by directly providing the chip 300 as the sealing piece, the mounting space is saved, and the layout of the core body is facilitated; specifically, the flange 310 may be welded to the first housing 110, the second housing 120, and the gas blocking portions 130 to achieve a sealing effect.

It should be understood that the flange 310 is fixedly welded to the first housing 110, the second housing 120 and the gas blocking portion 130 at the same time, such that the overall structural strength is high, it is not easy to loosen or have failed connection at the connection position, the first housing 110 and the second housing 120 have firm positions and are difficult to move relatively, the slit 500 is not easy to form, and the leakage-proof effect is good.

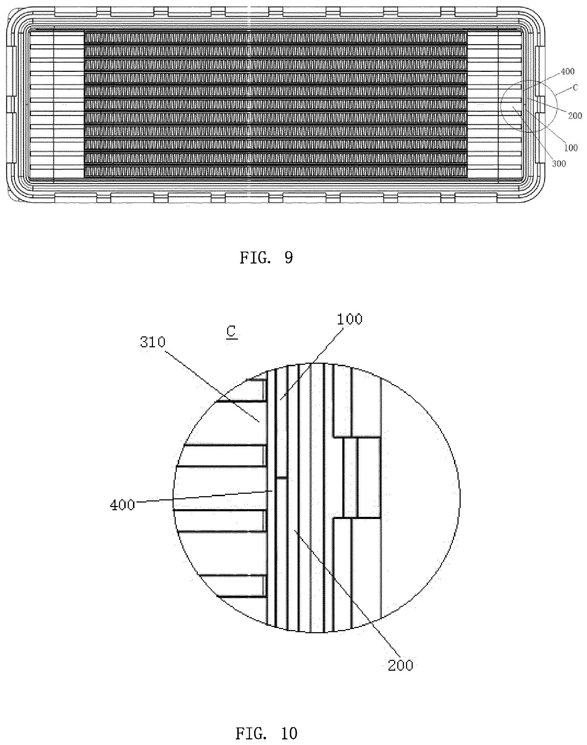

As shown in FIGS. 9 and 10, optionally, the core body according to the embodiment of the present disclosure includes a chip 300 and a side plate 400 located in the outer housing 100, the side plate 400 is connected with the outer housing 100 and the chip 300, and the side plate 400 is provided as the sealing piece. When the above-mentioned chip 300 is used as the sealing piece, although the cost may be reduced, the flange 310 of the chip 300 is required to be guaranteed to have a certain size in the second direction, so as to ensure that the flange 310 may cover the seam 140 and the gas blocking portion 130 at the same time, which increases the size of the chip 300 in the second direction, and after a plurality of chips 300 are stacked to form the core body, the size of the core body in the second direction is also increased to a certain extent, such that the core body has an increased volume and is inconvenient to mount; by using the side plate 400 as the sealing piece, the flange 310 is not required to cover the seam 140 and the gas blocking portion 130, and the size of the flange 310 in the second direction may be reduced appropriately, thus reducing the size of the core body in the second direction, and facilitating miniaturization of the intercooler.

A third aspect of the present disclosure provides an intercooler, including the core body according to the embodiment of the present disclosure.

The core body according to the above-mentioned embodiment of the present disclosure is adopted in the intercooler according to the embodiment of the present disclosure, and when gas leakage appears at the seam 140 of the outer housing 100, since the gas blocking portion 130 penetrates through the seam 140, the gas may be blocked by the gas blocking portion 130 when flowing to the gas blocking portion 130, so as to limit the flow rate of leaked gas to a certain extent, thereby alleviating the leakage degree of gas.

Referring to FIG. 10, optionally, the intercooler according to the embodiment of the present disclosure includes a main plate 200 mounted on the outer housing 100, and the main plate 200 covers the gas blocking portion 130s and is hermetically connected with the gas blocking portions 130.

In the intercooler according to the embodiment of the present disclosure, the main plate 200 is sleeved over the core body, a chamber body is connected with the core body by the main plate 200, and in order to avoid leakage of airflow between the main plate 200 and the core body, the main plate 200 is hermetically connected with the outer housing 100 of the core body; when the main plate 200 covers the gas blocking portions 130 from the outer side of the outer housing 100, the first housing 110, the second housing 120 and the gas blocking portions 130 may be tightly connected to form a whole, such that the first housing 110 and the second housing 120 are difficult to move relative to each other, and then, a slit 500 causing gas leakage is difficult to occur at the seam 140, thus reducing the gas leakage possibility of the intercooler.

When the above-mentioned sealing piece is adopted in the core body according to the embodiment of the present disclosure, that is, the sealing piece covers the seam 400 and the gas blocking portions 130 from the inner side of the outer housing 100, and the main plate 200 covers the gas blocking portions 130 and the seam 400 from the outer side of the outer housing 100, if the first housing 110 and the second housing 120 move relative to each other and the slit 500 is formed at the seam 140, the gas is blocked in the direction perpendicular to the seam 140 by the sealing piece, the main plate 200 and the gas blocking portions 130, such that the airflow cannot flow in the direction; the airflow flowing along the seam 140 is blocked by the gas blocking portions 130, and then, by the structure formed by the main plate 200, the sealing piece and the gas blocking portions 130, the gas in the intercooler is blocked when the slit 500 appears at the seam140, such that the gas is difficult to leak from the intercooler.

Moreover, when the above-mentioned sealing piece is adopted, and meanwhile, the groove portion 600 is formed on the outer housing 100, if the slit 500 appears at the seam 140 and the gap is formed between the gas blocking portion 130 and the groove portion 600, the flow speed of the airflow flowing in the slit 500 above and the gap is gradually reduced due to the blockage of the gas blocking portion 130 and the groove portion 600, and the airflow is finally difficult to leak from the above-mentioned gap; especially, when at least two gas blocking portions 130 and at least two groove portions 600 are provided correspondingly, the above-mentioned gaps are communicated with each other by the above-mentioned slits 500 to form fine passages between the main plate 200 and the sealing piece, and the airflow is required to flow by a long distance in the fine passages before flowing out of the intercooler; the flow speed is gradually reduced due to the blockage of each gas blocking portion 130 and each groove portion 600 during the flowing of the airflow, and the airflow is finally difficult to flow out of the intercooler; if both side edges 131 of the gas blocking portion 130 in the first direction are attached to the inner wall of the groove portion 600 at the same time, the possibility that the above-mentioned gap appears between the gas blocking portion 130 and the groove portion 600 is avoided, such that the gas is more difficult to leak from the seam 140, and the effect of sealing the gas is achieved.

### Industrial applicability

To sum up, the present disclosure provides the outer housing, the core body, and the intercooler, the leak-proofness/sealing property is good, and the gas is difficult to leak.

## Claims

1. An outer housing (100), wherein at least one seam (140) extending in a first direction is formed on the outer housing (100), and at least one gas blocking portion (130) penetrating through the at least one seam (140) is formed at the at least one seam (140);
wherein the outer housing (100) comprising a first housing (110) and a second housing (120) abutting each other to form the at least one seam (140), wherein the first housing (110), the at least one seam (140), and the second housing (120) are arranged in sequence in a second direction; and
the at least one gas blocking portion (130) extends in the second direction, or an extension direction of the at least one gas blocking portion (130) is inclined relative to the second direction, and the first direction and the second direction have an included angle;
**characterized in that**,
the at least one gas blocking portion (130) and the first housing (110) are integrally formed;
preferably, the at least one gas blocking portion (130) each has a sheet-shaped, plate-shaped or block-shaped convex structure;
wherein an end surface of one end of the at least one gas blocking portion (130) away from the first housing (110) in the second direction is an arc-shaped guide surface (132), and the arc-shaped guide surface (132) is connected with two side edges,
a width of the arc-shaped guide surface (132) in the first direction decreases gradually in a direction away from the first housing (110).

2. The outer housing (100) according to claim 1, wherein a number of the at least one gas blocking portion (130) is at least two, and the at least two gas blocking portions (130) are arranged in the first direction.

3. The outer housing (100) according to claim 1, wherein at least one groove portion (600) configured for cooperating with the at least one gas blocking portion (130) to accommodate the at least one gas blocking portion (130) is provided on the second housing (120),
preferably, the two side edges of the at least one gas blocking portion (130) in the first direction are attached to an inner wall of the at least one groove portion (600).

4. The outer housing (100) according to claim 3, wherein the two side edges linearly extend in the second direction.

5. The outer housing (100) according to claim 3, wherein the two side edges are inclined relative to each other.

6. The outer housing (100) according to any one of claims 1 to 5, wherein an end surface of one end of the at least one gas blocking portion (130) away from the first housing (110) in the second direction is a guide inclined surface, and the guide inclined surface is connected with the two side edges.

7. A core body, comprising the outer housing (100) according to any one of claims 1 to 5.

8. The core body according to claim 7, comprising a sealing piece located on an inner side of the outer housing (100), wherein the sealing piece covers both the at least one seam (140) and the at least one gas blocking portion (130), and the sealing piece is hermetically connected with the outer housing (100) at the at least one seam (140),
preferably, the sealing piece is configured as a chip (300) located in the outer housing (100), the chip (300) has a flange (310), and the flange (310) is hermetically connected with the outer housing (100) at the at least one seam (140).

9. The core body according to claim 8, comprising a chip (300) and a side plate (400) located in the outer housing (100), wherein the side plate (400) is connected with the outer housing (100) and the chip (300), and the side plate (400) serves as the sealing piece.

10. The core body according to any one of claims 8 to 9, wherein the sealing piece is fixedly welded to the outer housing (100).

11. An intercooler, comprising the core body according to any one of claims 8 to 10.

12. The intercooler according to claim 11, comprising a main plate (200) mounted on the outer housing (100), wherein the main plate (200) covers the at least one gas blocking portion (130) and is hermetically connected with the at least one gas blocking portion (130),
preferably, the main plate (200) is provided on an outer side of the outer housing (100), and seals a side of the at least one seam (140) located on the outer side of the outer housing (100).

## Patentansprüche

1. Außengehäuse (100), wobei an dem Außengehäuse (100) mindestens eine sich in einer ersten Richtung erstreckende Naht (140) gebildet ist, und an der mindestens einen Naht (140) mindestens ein durch die mindestens eine Naht (140) hindurchdringender Gasblockierabschnitt (130) gebildet ist;
wobei das Außengehäuse (100) ein erstes Gehäuseteil (110) und ein zweites Gehäuseteil (120) umfasst, die aneinander anliegen, um die mindestens eine Naht (140) zu bilden, wobei das erste Gehäuseteil (110), die mindestens eine Naht (140) und das zweite Gehäuseteil (120) in einer zweiten Richtung der Reihe nach angeordnet sind; und
der mindestens eine Gasblockierabschnitt (130) sich in der zweiten Richtung erstreckt, oder eine Erstreckungsrichtung des mindestens einen Gasblockierabschnitts (130) gegenüber der zweiten Richtung geneigt ist, und die erste Richtung und die zweite Richtung einen Einschlusswinkel aufweisen;
**dadurch gekennzeichnet, dass**
der mindestens eine Gasblockierabschnitt (130) und das erste Gehäuseteil (110) einstückig gebildet sind;
bevorzugt, der mindestens eine Gasblockierabschnitt (130) jeweils eine blattförmige, plattenförmige oder blockförmige konvexe Struktur aufweist;
wobei eine Endfläche eines Endes des mindestens einen Gasblockierabschnitts (130), das in der zweiten Richtung von dem ersten Gehäuseteil (110) weg liegt, eine bogenförmige Führungsfläche (132) ist, und die bogenförmige Führungsfläche (132) mit zwei Seitenkanten verbunden ist,
eine Breite der bogenförmigen Führungsfläche (132) in der ersten Richtung sich allmählich verringert in einer von dem ersten Gehäuseteil (110) weg führenden Richtung.

2. Außengehäuse (100) nach Anspruch 1, wobei eine Anzahl des mindestens einen Gasblockierabschnitts (130) mindestens zwei beträgt, und die mindestens zwei Gasblockierabschnitte (130) in der ersten Richtung angeordnet sind.

3. Außengehäuse (100) nach Anspruch 1, wobei an dem zweiten Gehäuseteil (120) mindestens ein Nutenabschnitt (600) bereitgestellt ist, der zum Zusammenwirken mit dem mindestens einen Gasblockierabschnitt (130) ausgebildet ist, um den mindestens einen Gasblockierabschnitt (130) aufzunehmen,
bevorzugt, wobei die zwei Seitenkanten des mindestens einen Gasblockierabschnitts (130) in der ersten Richtung an einer Innenwand des mindestens einen Nutenabschnitts (600) anliegen.

4. Außengehäuse (100) nach Anspruch 3, wobei die zwei Seitenkanten sich linear in der zweiten Richtung erstrecken.

5. Außengehäuse (100) nach Anspruch 3, wobei die zwei Seitenkanten relativ zueinander geneigt sind.

6. Außengehäuse (100) nach einem der Ansprüche 1 bis 5, wobei eine Endfläche eines Endes des mindestens einen Gasblockierabschnitts (130), das in der zweiten Richtung von dem ersten Gehäuseteil (110) weg liegt, eine geneigte Führungsfläche ist, und die geneigte Führungsfläche mit den zwei Seitenkanten verbunden ist.

7. Kernkörper, umfassend das Außengehäuse (100) nach einem der Ansprüche 1 bis 5.

8. Kernkörper nach Anspruch 7, umfassend ein Dichtelement, das an einer Innenseite des Außengehäuses (100) angeordnet ist, wobei das Dichtelement sowohl die mindestens eine Naht (140) als auch den mindestens einen Gasblockierabschnitt (130) abdeckt, und das Dichtelement an der mindestens einen Naht (140) gasdicht mit dem Außengehäuse (100) verbunden ist,
bevorzugt, das Dichtelement als ein in dem Außengehäuse (100) angeordneter Chip (300) ausgebildet ist, der Chip (300) einen Flansch (310) aufweist, und der Flansch (310) an der mindestens einen Naht (140) gasdicht mit dem Außengehäuse (100) verbunden ist.

9. Kernkörper nach Anspruch 8, umfassend einen Chip (300) und eine in dem Außengehäuse (100) angeordnete Seitenplatte (400), wobei die Seitenplatte (400) mit dem Außengehäuse (100) und dem Chip (300) verbunden ist, und die Seitenplatte (400) als das Dichtelement dient.

10. Kernkörper nach einem der Ansprüche 8 bis 9, wobei das Dichtelement fest mit dem Außengehäuse (100) verschweißt ist.

11. Zwischenkühler, umfassend den Kernkörper nach einem der Ansprüche 8 bis 10.

12. Zwischenkühler nach Anspruch 11, umfassend eine am Außengehäuse (100) montierte Hauptplatte (200), wobei die Hauptplatte (200) den mindestens einen Gasblockierabschnitt (130) abdeckt und gasdicht mit dem mindestens einen Gasblockierabschnitt (130) verbunden ist,
bevorzugt, wobei die Hauptplatte (200) an einer Außenseite des Außengehäuses (100) bereitgestellt ist, und eine Seite der mindestens einen Naht (140) abdichtet, die an der Außenseite des Außengehäuses (100) angeordnet ist.

## Revendications

1. Boîtier externe (100), dans lequel au moins un joint (140) s'étendant dans une première direction est formé sur le boîtier externe (100), et au moins une portion de blocage de gaz (130) pénétrant à travers l'au moins un joint (140) est formée au niveau de l'au moins un joint (140) ;
dans lequel le boîtier externe (100) comprend un premier boîtier (110) et un second boîtier (120) venant en butée l'un contre l'autre pour former l'au moins un joint (140), dans lequel le premier boîtier (110), l'au moins un joint (140) et le second boîtier (120) sont agencés en séquence dans une seconde direction ; et
l'au moins une portion de blocage de gaz (130) s'étend dans la seconde direction, ou une direction d'extension de l'au moins une portion de blocage de gaz (130) est inclinée par rapport à la seconde direction, et la première direction et la seconde direction présentent un angle inclus entre elles ;
**caractérisé en ce que**,
l'au moins une portion de blocage de gaz (130) et le premier boîtier (110) sont formés d'un seul tenant ;
de préférence, l'au moins une portion de blocage de gaz (130) présente à chaque fois une structure convexe en forme de feuille, de plaque ou de bloc ;
dans lequel une surface d'extrémité d'une extrémité de l'au moins une portion de blocage de gaz (130) éloignée du premier boîtier (110) dans la seconde direction est une surface de guidage en forme d'arc (132), et la surface de guidage en forme d'arc (132) est reliée à deux bords latéraux,
une largeur de la surface de guidage en forme d'arc (132) dans la première direction diminue progressivement dans une direction s'éloignant du premier boîtier (110).

2. Boîtier externe (100) selon la revendication 1, dans lequel le nombre de l'au moins une portion de blocage de gaz (130) est au moins deux, et les au moins deux portions de blocage de gaz (130) sont agencées dans la première direction.

3. Boîtier externe (100) selon la revendication 1, dans lequel au moins une portion de rainure (600) configurée pour coopérer avec l'au moins une portion de blocage de gaz (130) afin de recevoir l'au moins une portion de blocage de gaz (130) est fournie sur le second boîtier (120),
de préférence, les deux bords latéraux de l'au moins une portion de blocage de gaz (130) dans la première direction sont fixés sur une paroi interne de l'au moins une portion de rainure (600).

4. Boîtier externe (100) selon la revendication 3, dans lequel les deux bords latéraux s'étendent linéairement dans la seconde direction.

5. Boîtier externe (100) selon la revendication 3, dans lequel les deux bords latéraux sont inclinés l'un par rapport à l'autre.

6. Boîtier externe (100) selon l'une quelconque des revendications 1 à 5, dans lequel une surface d'extrémité d'une extrémité de l'au moins une portion de blocage de gaz (130) éloignée du premier boîtier (110) dans la seconde direction est une surface de guidage inclinée, et la surface de guidage inclinée est reliée aux deux bords latéraux.

7. Corps central, comprenant le boîtier externe (100) selon l'une quelconque des revendications 1 à 5.

8. Corps central selon la revendication 7, comprenant une pièce d'étanchéité située sur un côté interne du boîtier externe (100), dans lequel la pièce d'étanchéité couvre à la fois l'au moins un joint (140) et l'au moins une portion de blocage de gaz (130), et la pièce d'étanchéité est reliée hermétiquement au boîtier externe (100) au niveau de l'au moins un joint (140),
de préférence, la pièce d'étanchéité est configurée en tant que puce (300) située dans le boîtier externe (100), la puce (300) présente une bride (310), et la bride (310) est reliée hermétiquement au boîtier externe (100) au niveau de l'au moins un joint (140).

9. Corps central selon la revendication 8, comprenant une puce (300) et une plaque latérale (400) situées dans le boîtier externe (100), dans lequel la plaque latérale (400) est reliée au boîtier externe (100) et à la puce (300), et la plaque latérale (400) sert de pièce d'étanchéité.

10. Corps central selon l'une quelconque des revendications 8 à 9, dans lequel la pièce d'étanchéité est soudée de façon fixe au boîtier externe (100).

11. Refroidisseur intermédiaire, comprenant le corps central selon l'une quelconque des revendications 8 à 10.

12. Refroidisseur intermédiaire selon la revendication 11, comprenant une plaque principale (200) montée sur le boîtier externe (100), dans lequel la plaque principale (200) couvre l'au moins une portion de blocage de gaz (130) et est reliée hermétiquement à l'au moins une portion de blocage de gaz (130),
de préférence, la plaque principale (200) est fournie sur un côté externe du boîtier externe (100) et obture un côté de l'au moins un joint (140) situé sur le côté externe du boîtier externe (100).
